# EUROPEAN PATENT APPLICATION

(11) **EP 4 725 799 A1**
(43) Date of publication of application: **15.04.2026**
(21) Application number: 23940009.6
(22) Date of filing: 08.06.2023
(51) Int. Cl.: B62D 7/18, B60G 3/18

(54) **SUSPENSION DEVICE**

(71) Applicant: JTEKT CORPORATION, Kariya-shi, Aichi 448-8652 (JP)
(72) Inventor: SUZUKI, Yoshiharu, Kariya-shi, Aichi 448-8652 (JP)
(74) Representative: Winter, Brandl - Partnerschaft mbB
(86) International application number: PCT/JP2023/021351
(87) International publication number: WO 2024/252616

(57) **Abstract**

A suspension system (100) includes a turning member (110), a suspension member (130), and a shock absorbing mechanism (160). The turning member (110) is connected to an axle (203) of a steered wheel (200) of a vehicle, extends upward from the axle (203), and turns the steered wheel (200) by receiving an external force for turning. The suspension member (130) is disposed above the steered wheel (200), and includes one end swingably connected to the turning member (110) and the other end swingably connected to a vehicle body of the vehicle. The shock absorbing mechanism (160) includes one end connected to at least one of the turning member (110) and the suspension member (130) and the other end connected to the vehicle body.

## Description

### TECHNICAL FIELD

The present invention relates to a suspension system for use in a vehicle.

### BACKGROUND ART

Hitherto, there are suspension systems that are used in vehicles and that are connected to axles and have a shock absorbing function. For example, Patent Document 1 discloses a vehicle tire-wheel assembly mounting module for mounting a tire-wheel assembly (tire and wheel) on a vehicle body. The vehicle tire-wheel assembly mounting module includes a tire-wheel assembly drive unit, a suspension device, and a turning device. The tire-wheel assembly drive unit is disposed inward of the rim of the wheel. A housing of the tire-wheel assembly drive unit functions as a carrier that rotatably holds the tire-wheel assembly. The suspension device includes a lower arm that is a suspension arm, a housing for the tire-wheel assembly drive unit, a shock absorber, and a suspension spring.

### Related Art Documents

### Patent Documents

Patent Document 1: Japanese Unexamined Patent Application Publication No. 2020-111270 (JP 2020-111270 A)

### SUMMARY OF THE INVENTION

### Problem to be Solved by the Invention

In the above conventional vehicle tire-wheel assembly mounting module, the tip of the lower arm is connected to the tire-wheel assembly drive unit disposed inward of the rim of the wheel and extends inward from the tire-wheel assembly (toward the inside of the vehicle; the same applies hereinafter). That is, the lower arm is disposed in a space inward of the tire-wheel assembly to be turned (steered wheel). Thus, it is difficult to use the space inward of the steered wheel as, for example, a vehicle cabin space.

The present invention has been made by the inventors of the present application by focusing on the above problem, and has an object to provide a suspension system that can achieve effective use of a space inward of a steered wheel.

### Means for Solving the Problem

A suspension system according to one aspect of the present invention includes: a turning member that is connected to an axle of a steered wheel of a vehicle, extends upward, and turns the steered wheel by receiving an external force for turning; a suspension member that is disposed above the steered wheel, and includes one end swingably connected to the turning member and the other end swingably connected to a vehicle body of the vehicle; and a shock absorbing mechanism that includes one end connected to at least one of the turning member and the suspension member and the other end connected to the vehicle body.

### Effects of the Invention

With the suspension system of the present invention, the space inward of the steered wheel can be used effectively.

### BRIEF DESCRIPTION OF THE DRAWINGS

[FIG. 1] FIG. 1 is a schematic diagram showing an overview of the configuration of a steering system according to an embodiment.
[FIG. 2] FIG. 2 is a first perspective view showing the configuration of a suspension system according to the embodiment and its surroundings.
[FIG. 3] FIG. 3 is a second perspective view showing the configuration of the suspension system according to the embodiment and its surroundings.
[FIG. 4] FIG. 4 is a plan view showing the configuration of the suspension system according to the embodiment and its surroundings.
[FIG. 5] FIG. 5 is a side view showing the configuration of the suspension system according to the embodiment and its surroundings.
[FIG. 6] FIG. 6 is a plan view showing the suspension system according to the embodiment in a state in which a steered wheel is turned rightward.
[FIG. 7] FIG. 7 is a plan view showing the suspension system according to the embodiment in a state in which the steered wheel is turned leftward.
[FIG. 8] FIG. 8 is a side view showing the suspension system according to the embodiment in a state in which the steered wheel moves upward.
[FIG. 9] FIG. 9 is a side view showing the suspension system according to the embodiment in a state in which the steered wheel moves downward.
[FIG. 10] FIG. 10 is a side view showing the configuration of a suspension system according to a modification of the embodiment and its surroundings.

### MODES FOR CARRYING OUT THE INVENTION

An embodiment and its modification will be described in detail below with reference to the drawings. The embodiment and the modification described below illustrate inclusive or specific examples. Numerical values, shapes, materials, components, disposition positions and connection forms of the components, and the order of manufacturing steps illustrated in the following embodiment and modification are examples, and do not limit the present invention. Among the components in the following embodiment and modification, components that are not described in the independent claims showing the broadest concepts will be described as optional components.

The drawings are schematic drawings in which objects are emphasized, omitted, or adjusted in terms of their proportions as appropriate to demonstrate the present invention. Therefore, shapes, positional relationships, and proportions may differ from actual shapes, positional relationships, and proportions. In the following embodiment and claims, expressions indicating relative directions or postures, such as "parallel" and "orthogonal," may be used but these expressions also include cases where the directions or postures are not strictly those in the expressions. For example, description "two directions are parallel" means not only that the two directions are completely parallel but also that they are substantially parallel, that is, includes a difference of about several percent.

### (Embodiment)

### [1. Overview of Configuration of Steering System 10]

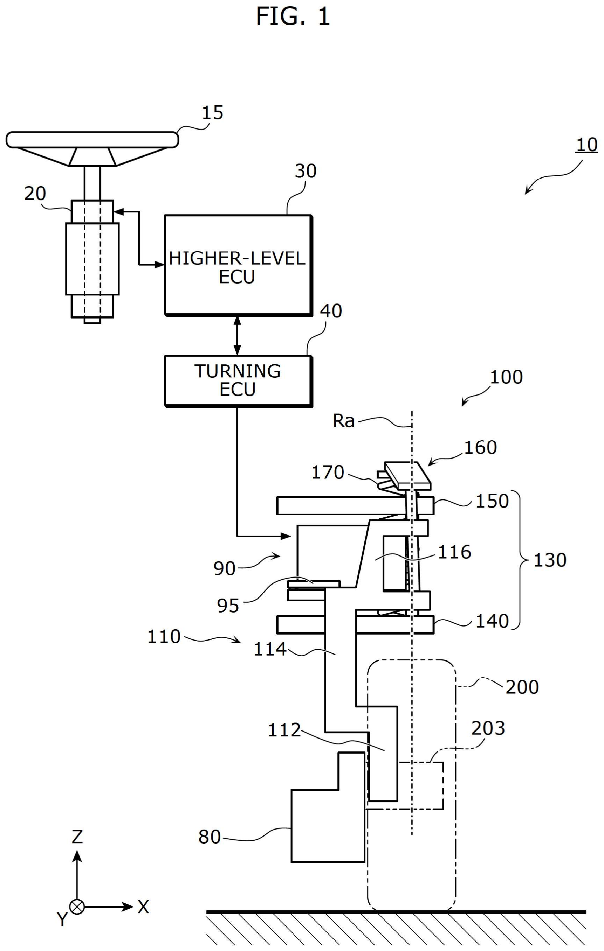

First, the overall configuration of a steering system 10 according to the present embodiment will be described with reference to FIG. 1. FIG. 1 is a schematic diagram showing an overview of the configuration of the steering system 10 according to the embodiment. In FIG. 1, a traveling drive device 80, a turning drive device 90, and a suspension system 100 are shown in a simplified form, and approximate outlines of a tire-wheel assembly (steered wheel 200) and an axle 203 of the steered wheel 200 are shown by long dashed double-short dashed lines. In FIG. 1, a turning axis Ra (virtual axis) that is the center of rotation of the steered wheel 200 during turning is shown by a long dashed short dashed line.

The steering system 10 is a system that steers a vehicle including the steering system 10 by turning the steered wheel 200 in response to an operation of an operation member 15 operated by a driver. The steering system 10 includes the suspension system 100 according to the present embodiment.

Specifically, the steering system 10 includes the turning drive device 90, the suspension system 100, and the traveling drive device 80. The turning drive device 90 generates a force for turning the steered wheel 200 (turning force). The suspension system 100 supports the steered wheel 200 and transmits the turning force generated by the turning drive device 90 to the steered wheel 200. The suspension system 100 further includes a shock absorbing mechanism 160 that reduces vibrations and shocks received from a road surface by the steered wheel 200. The traveling drive device 80 provides the steered wheel 200 with a driving force for traveling. That is, in the present embodiment, the steered wheel 200 also functions as a driving wheel that drives the vehicle including the steering system 10 to travel.

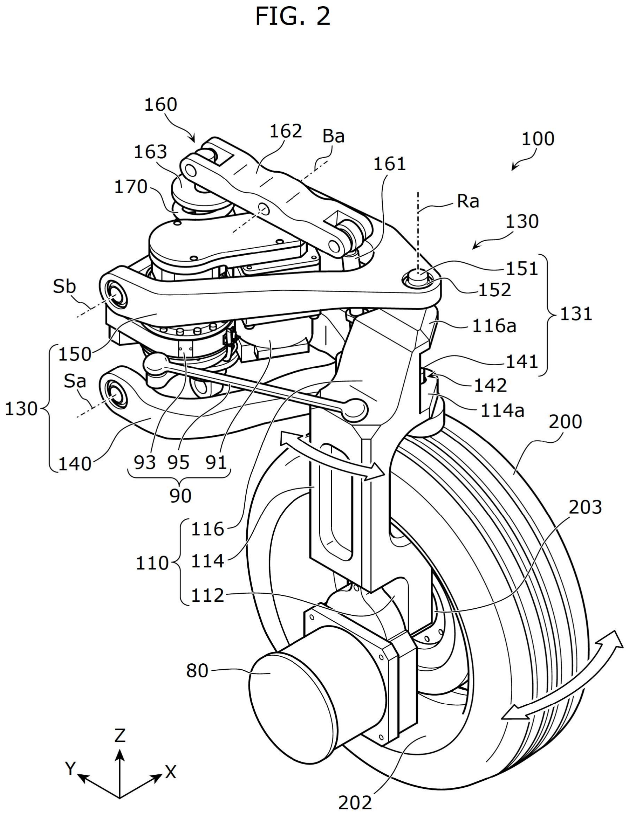

More specifically, the suspension system 100 includes a turning member 110 connected to the axle 203 of the steered wheel 200. The turning drive device 90 and the turning member 110 are connected by a link arm 95, and the turning drive device 90 provides the turning force to the turning member 110 via the link arm 95. Thus, the turning member 110 rotates about the turning axis Ra. As a result, the steered wheel 200 supported by the turning member 110 via the axle 203 also rotates about the turning axis Ra. That is, the steered wheel 200 is turned. The configuration and operation of the suspension system 100 will be described in detail later with reference to FIGS. 2 to 9.

The traveling drive device 80 rotates the axle 203 fixed to the steered wheel 200. As a result, the steered wheel 200 rotates about the axle 203. Thus, the vehicle including the steering system 10 travels. In the present embodiment, the turning member 110 rotatably supports the axle 203. The traveling drive device 80 is fixed to the turning member 110 of the suspension system 100. Therefore, the traveling drive device 80 rotates along with the rotation of the turning member 110 about the turning axis Ra, and moves along with the movement of the turning member 110 in an up-down direction.

The turning member 110 need not be directly connected to the axle 203. For example, the turning member 110 may be connected to the axle 203 via the traveling drive device 80. In the present embodiment, as shown in FIG. 1, the turning axis Ra is parallel to a vertical direction (Z-axis direction). However, the turning axis Ra need not be parallel to the vertical direction. For example, to increase the contact area between the steered wheel 200 and the road surface when the vehicle passes through a corner, the turning axis Ra may be inclined inward (in a direction in which the turning axis Ra extends outward (positive X-axis direction in FIG. 1) as it becomes closer to the road surface). That is, the camber angle of the steered wheel 200 may be negative. Although illustration is omitted in FIG. 1, for example, when viewed in the X-axis direction, the turning axis Ra may be inclined rearward as it becomes away from the road surface (in a positive Y-axis direction as it extends in a positive Z-axis direction). That is, the caster angle of the steered wheel 200 may be larger than 0°.

The steering system 10 having such a configuration operates under the control of a higher-level ECU (Electronic Control Unit) 30. Specifically, for example, when the operation member 15 is rotated by the driver's operation, the rotation angle and the angular velocity of a shaft connected to the operation member 15 are detected by a steering angle sensor 20. The detection results obtained by the steering angle sensor 20 are transmitted to the higher-level ECU 30, and the higher-level ECU 30 transmits a control signal based on the detection results to a turning ECU 40. The turning ECU 40 controls the turning drive device 90 in accordance with the received control signal. Thus, the steered wheel 200 rotates (turns) to change the steered angle. Such a system is called, for example, an SBW (Steer-By-Wire) system. The higher-level ECU 30 receives various types of information such as detection results obtained by a vehicle speed sensor, but details of processes by the higher-level ECU 30 will be omitted. The vehicle including the steering system 10 also includes, for example, a system that controls the traveling drive device 80 under the control of the higher-level ECU 30, but illustration and description of this system will be omitted.

FIG. 1 shows the steered wheel 200 that is a left front tire-wheel assembly among at least four tire-wheel assemblies (right and left front tire-wheel assemblies and right and left rear tire-wheel assemblies) of the vehicle, and the surrounding configuration. In the present embodiment, the turning drive device 90, the suspension system 100, the traveling drive device 80, etc. are also disposed for at least the right front tire-wheel assembly among the other three tire-wheel assemblies. That is, in the present embodiment, each of the at least two steered wheels 200 has a driving force independent of the other, and can be turned independently of the other.

### [2. Configuration and Operation of Suspension System 100]

Next, the suspension system 100 according to the present embodiment will be described in more detail with reference to FIGS. 2 to 9. First, the configuration of the suspension system 100 according to the present embodiment and its surroundings will be described with reference to FIG. 1 and FIGS. 2 to 5.

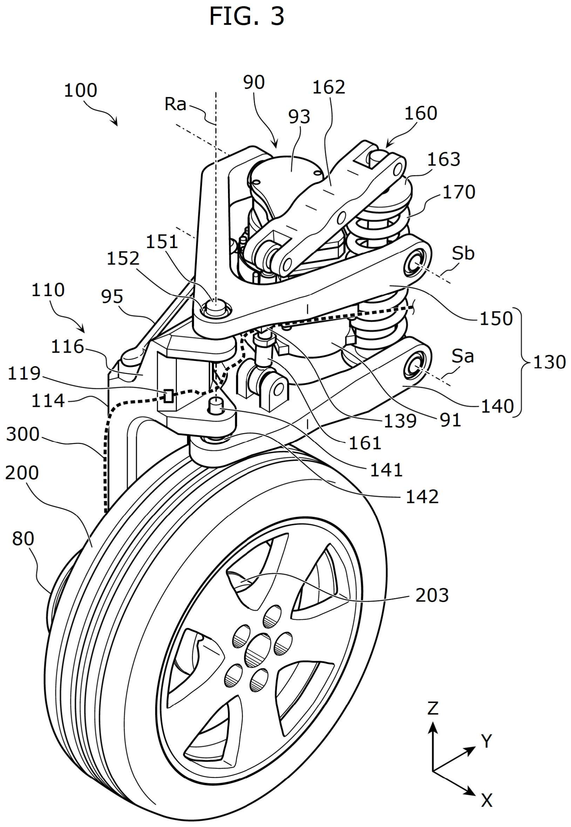

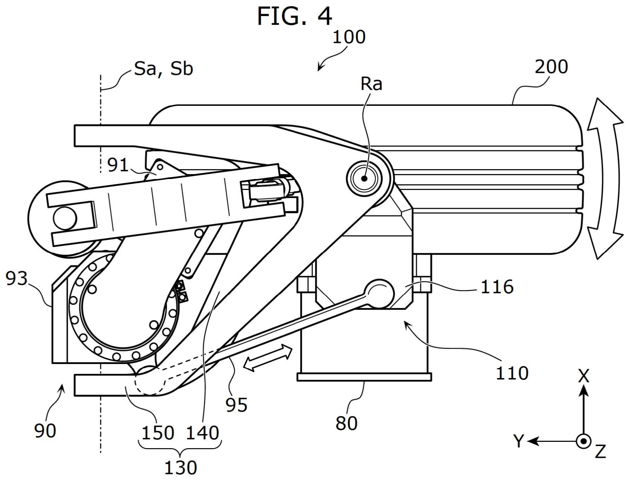

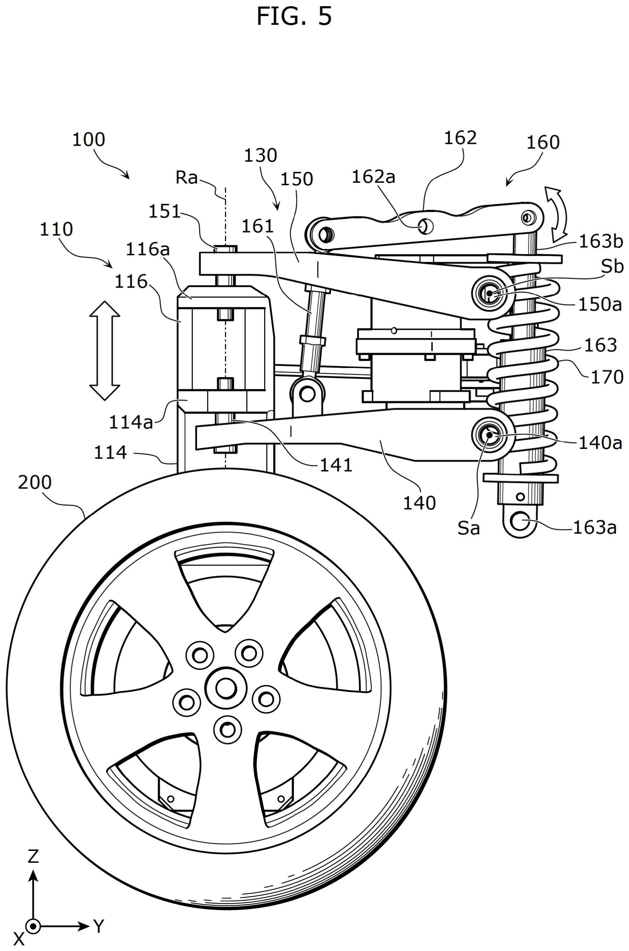

FIG. 2 is a first perspective view showing the configuration of the suspension system 100 according to the embodiment and its surroundings. FIG. 3 is a second perspective view showing the configuration of the suspension system 100 according to the embodiment and its surroundings. In FIG. 3, an approximate disposition position of a wire 300 connected to the traveling drive device 80 is shown by a wide dashed line. The wire 300 is omitted from the drawings other than FIG. 3. FIG. 4 is a plan view showing the configuration of the suspension system 100 according to the embodiment and its surroundings. FIG. 5 is a side view showing the configuration of the suspension system 100 according to the embodiment and its surroundings. FIG. 5 shows the configuration of the suspension system 100 and its surroundings when the suspension system 100 is viewed from the outside (positive X-axis direction). In FIGS. 2 to 5, part of a plurality of shafts of the suspension system 100 (such as a shaft connecting a suspension member 130 to a vehicle body and a shaft connecting a first link arm 161 to the suspension member 130) is omitted.

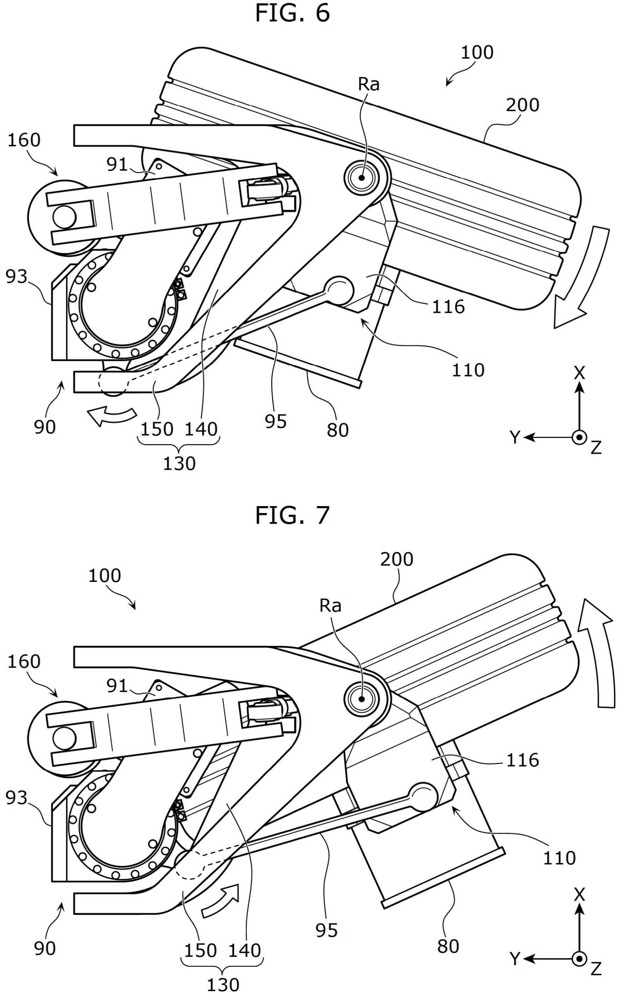

Other members may be disposed around the suspension system 100, as typified by a brake device disposed inside a wheel 202 (inward of a rim) (see FIG. 2) of the steered wheel 200, but these other members are omitted from FIGS. 2 to 5. The same applies to FIGS. 6 to 10 described later. FIGS. 1 to 5 show the suspension system 100 when the steered wheel 200 is in a straight-ahead state.

As shown in FIGS. 1 to 5, the suspension system 100 includes the turning member 110, the suspension member 130, and the shock absorbing mechanism 160. The turning member 110 is connected to the axle 203 of the steered wheel 200 and extends upward from the axle 203. The turning member 110 turns the steered wheel 200 by receiving an external force for turning. In the present embodiment, the external force is a force generated by the turning drive device 90.

More specifically, the turning member 110 is a member that is elongated in the up-down direction and includes a first connecting portion 112, a second connecting portion 114, and a third connecting portion 116. As shown in FIGS. 1 to 5, the first connecting portion 112 is connected to the axle 203 of the steered wheel 200 and extends upward from the axle 203. The first connecting portion 112 rotatably supports the axle 203. The second connecting portion 114 bulges away from the steered wheel 200 and is partially disposed above the steered wheel 200. The third connecting portion 116 extends upward from the second connecting portion 114.

More specifically, at least part of the first connecting portion 112 is located inside the steered wheel 200 when viewed in a direction orthogonal to the vehicle width direction (X-axis direction) (see FIGS. 1 and 4). That is, the first connecting portion 112 supports the axle 203 of the steered wheel 200 at a position close to the center of the steered wheel 200 in the width direction (X-axis direction in FIGS. 2 to 5). Therefore, the steered wheel 200 can be supported more stably.

The second connecting portion 114 connected to the upper end of the first connecting portion 112 bulges toward the inside of the vehicle (in a negative X-axis direction in FIGS. 1 to 5). This prevents interference between the turning member 110 and the steered wheel 200 (more specifically, the wheel 202 (see FIG. 2)).

In the present embodiment, the suspension member 130 is connected to the turning member 110 at two locations above the steered wheel 200 by a connecting shaft 131 (see FIG. 2). Specifically, the second connecting portion 114 includes a first end 114a (see FIG. 5) disposed above the steered wheel 200, and the third connecting portion 116 includes a second end 116a (see FIG. 5) disposed above the first end 114a. The connecting shaft 131 includes a first shaft 141 and a second shaft 151. The first shaft 141 is fixed to the first end 114a, and the second shaft 151 is fixed to the second end 116a. The first end 114a is connected to a first suspension member 140 via the first shaft 141, and the second end 116a is connected to a second suspension member 150 via the second shaft 151. In this manner, in the present embodiment, the suspension member 130 supports the steered wheel 200 via the turning member 110 at a position directly above the steered wheel 200. Thus, for example, the steered wheel 200 can be supported more stably.

As shown in FIGS. 1 to 5, the turning drive device 90 is connected to the turning member 110 supported by the suspension member 130. Specifically, the turning drive device 90 includes a turning force generating unit 91 including a motor that generates a turning force, a torque converting unit 93, and the link arm 95. The torque converting unit 93 converts a torque input from the turning force generating unit 91 into a larger torque using a speed reducer, and outputs the larger torque. The torque converting unit 93 is fixed to the vehicle body (not shown). The link arm 95 transmits the torque output from the torque converting unit 93 to the turning member 110. One end of the link arm 95 is rotatably supported by the torque converting unit 93, and the other end is rotatably supported by the turning member 110. Specifically, the other end of the link arm 95 is rotatably supported by the second connecting portion 114 of the turning member 110.

In the turning drive device 90 having such a configuration, the motor of the turning force generating unit 91 rotates in response to a control signal from the turning ECU 40 (see FIG. 1). The torque converting unit 93 converts the torque generated by the rotation of the motor into a larger torque using the speed reducer etc., and moves the one end of the link arm 95 (end in the positive Y-axis direction in the present embodiment) in a front-rear direction. As a result, the turning member 110 connected to the other end of the link arm 95 (end in a negative Y-axis direction in the present embodiment) rotates about the turning axis Ra. That is, the steered wheel 200 is turned. In this manner, in the present embodiment, the turning member 110 turns the steered wheel 200 by receiving an external force for turning from the turning drive device 90.

As shown in FIGS. 2, 3, and 5, the suspension member 130 is disposed above the steered wheel 200. The turning member 110 is connected to one end of the suspension member 130 in the front-rear direction. The other end of the suspension member 130 in the front-rear direction is connected to the vehicle body of the vehicle (not shown). That is, the suspension member 130 extends from the one end of the suspension member 130 in a direction along the front-rear direction of the vehicle body. Specifically, in the present embodiment, the turning member 110 is rotatably supported by the first shaft 141 and the second shaft 151 disposed at the front end (end in the negative Y-axis direction) of the suspension member 130. The first shaft 141 and the second shaft 151 are shafts that serve as the center of rotation of the turning member 110, that is, shafts that define the turning axis Ra.

More specifically, the suspension member 130 according to the present embodiment includes the first suspension member 140 and the second suspension member 150 disposed above the first suspension member 140 as shown in FIGS. 1 to 5. The first suspension member 140 is a member called, for example, a lower arm, and the second suspension member 150 is a member called, for example, an upper arm. The first suspension member 140 is connected to the turning member 110 via the first shaft 141. The second suspension member 150 is connected to the turning member 110 via the second shaft 151.

More specifically, the first shaft 141 is fixed to the first end 114a of the turning member 110 and is connected to the first suspension member 140 via a ball joint 142 disposed at the front end of the first suspension member 140. The second shaft 151 is fixed to the second end 116a of the turning member 110 and is connected to the second suspension member 150 via a ball joint 152 disposed at the front end of the second suspension member 150. As shown in FIGS. 2 to 5, the first shaft 141 and the second shaft 151 are disposed such that their axes are aligned on a straight line. That is, the turning axis Ra is defined at a position that coincides with the straight line. The ball joint 142 may be disposed at the first end 114a of the turning member 110, and the first shaft 141 may be fixed to the first suspension member 140. The ball joint 152 may be disposed at the second end 116a of the turning member 110, and the second shaft 151 may be fixed to the second suspension member 150.

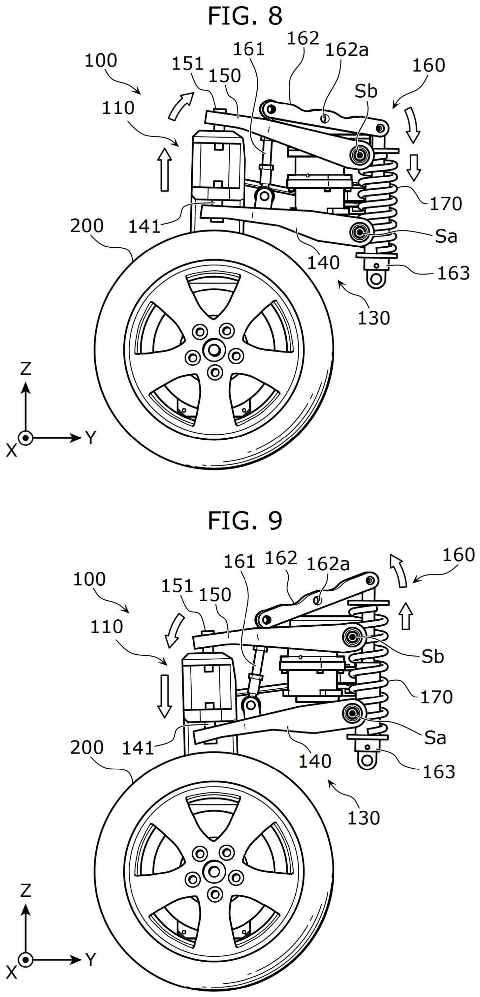

The rear ends (ends in the positive Y-axis direction) of the first suspension member 140 and the second suspension member 150 are supported by the vehicle body of the vehicle such that they can swing about axes extending in the vehicle width direction (X-axis direction). Specifically, the first suspension member 140 is connected to the vehicle body by a shaft (not shown) disposed in a swing shaft hole 140a (see FIG. 5). The first suspension member 140 swings about a swing axis Sa (virtual axis) that is the central axis of the shaft and extends in the X-axis direction. The second suspension member 150 is connected to the vehicle body by a shaft (not shown) disposed in a swing shaft hole 150a (see FIG. 5). The second suspension member 150 swings about a swing axis Sb (virtual axis) that is the central axis of the shaft and extends in the X-axis direction. That is, the first suspension member 140 and the second suspension member 150 are swingable about the X-axis such that their front ends move in the up-down direction. As described above, the front ends of the first suspension member 140 and the second suspension member 150 are connected to the turning member 110 by the ball joints 142 and 152. Therefore, the first suspension member 140 and the second suspension member 150 are rotatable (swingable) about the X-axis relative to the turning member 110. Thus, the first suspension member 140 and the second suspension member 150 can guide the movement (displacement) of the turning member 110 in the up-down direction while maintaining the posture that is substantially parallel to the up-down direction (see FIGS. 8 and 9 described later).

The suspension system 100 further includes the shock absorbing mechanism 160 that urges the turning member 110 downward (in a negative Z-axis direction) and reduces vibrations and shocks in the up-down direction that are received by the turning member 110. In the present embodiment, the shock absorbing mechanism 160 reduces vibrations and shocks received by the turning member 110 via the suspension member 130 connected to the turning member 110. That is, the shock absorbing mechanism 160 reduces, for example, vibrations and shocks received from the road surface by the steered wheel 200 while the vehicle is traveling.

Specifically, as shown in FIGS. 2 to 5, the shock absorbing mechanism 160 according to the present embodiment includes a spring 170, a damper 163, the first link arm 161, and a second link arm 162. The spring 170 is a member that expands and contracts to directly absorb changes in the road surface that are transmitted to the steered wheel 200. In the present embodiment, a coil spring is used as the spring 170. The damper 163 damps the expansion and contraction of the spring 170. The first link arm 161 and the second link arm 162 transmit the movement of the turning member 110 in the up-down direction to the spring 170.

More specifically, one end of the first link arm 161 is connected to the suspension member 130 (first suspension member 140) by a shaft (not shown). The other end of the first link arm 161 is connected to the second link arm 162 by a shaft (not shown). The end of the second link arm 162 opposite to the end connected to the first link arm 161 is connected to the damper 163 by a shaft (not shown). One of the two members connected by the shaft is rotatable relative to the other.

A shaft (not shown) is inserted into a support shaft hole 162a at the center of the second link arm 162, and the second link arm 162 is rotatably supported on the vehicle body by the shaft. Thus, the second link arm 162 changes the direction of an upward or downward force received from the first link arm 161 into the opposite direction. A lower end 163a (see FIG. 5) of the damper 163 is supported on the vehicle body by a shaft (not shown). Thus, the movement of the lower end 163a of the damper 163 in the up-down direction is restricted by the vehicle body.

In the shock absorbing mechanism 160 having the above configuration, for example, when the turning member 110 receives an upward force, the upward force is transmitted to the damper 163 as a downward force via the suspension member 130, the first link arm 161, and the second link arm 162. Thus, an upper end 163b (see FIG. 5) of the damper 163 is pushed downward. As a result, the damper 163 and the spring 170 sandwiched between upper and lower flanges of the damper 163 are compressed. That is, the shock absorbing mechanism 160 according to the present embodiment includes a link mechanism that includes the first link arm 161 and the second link arm 162 and that changes the direction of the upward force received by the turning member 110 into the direction of the downward force. This suppresses an increase in size in the up-down direction (Z-axis direction) for the suspension system 100 including the shock absorbing mechanism 160.

The traveling drive device 80 that provides the steered wheel 200 with the driving force for traveling is fixed to the first connecting portion 112 on the opposite side to the steered wheel 200. The wire 300 is connected to the traveling drive device 80. Electric power and/or control signals for operating the motor of the traveling drive device 80 are supplied to the traveling drive device 80 via the wire 300. As shown in FIG. 3, the wire 300 is fixed to the suspension system 100 at least at two locations. Specifically, the suspension system 100 includes a first fixing portion 119 and a second fixing portion 139. Each of the first fixing portion 119 and the second fixing portion 139 is realized by, for example, a resin hook or an adhesive tape. The wire 300 is disposed across a space through which the turning axis Ra extends, and the first fixing portion 119 and the second fixing portion 139 are located opposite to each other across the turning axis Ra in the front-rear direction.

Next, an example of the operation of the suspension system 100 according to the present embodiment will be described with reference to FIGS. 6 to 9 in addition to FIGS. 1 to 5. FIG. 6 is a plan view showing the suspension system 100 according to the embodiment in a state in which the steered wheel 200 is turned rightward. FIG. 7 is a plan view showing the suspension system 100 according to the embodiment in a state in which the steered wheel 200 is turned leftward. FIG. 8 is a side view showing the suspension system 100 according to the embodiment in a state in which the steered wheel 200 moves upward. FIG. 9 is a side view showing the suspension system 100 according to the embodiment in a state in which the steered wheel 200 moves downward. For example, the description "the steered wheel 200 moves upward" means that the steered wheel 200 moves in the positive Z-axis direction relative to the vehicle body, and the description "the steered wheel 200 moves downward" means that the steered wheel 200 moves in the negative Z-axis direction relative to the vehicle body.

For example, it is assumed that the driver rotates the operation member 15 (see FIG. 1) clockwise in a view from the driver. In this case, the turning drive device 90 operates under the control of the turning ECU 40 to pull rearward the end (rear end) of the link arm 95 in the negative Y-axis direction. Thus, the turning member 110 connected to the end (front end) of the link arm 95 in the positive Y-axis direction rotates clockwise in a plan view about the turning axis Ra. Accordingly, the steered wheel 200 (see FIG. 4) in, for example, a straight-ahead state is turned rightward (negative X-axis direction) as shown in FIG. 6.

Next, it is assumed that the driver rotates the operation member 15 counterclockwise in a view from the driver in the state in which the steered wheel 200 is turned rightward (negative X-axis direction) (see FIG. 6). In this case, the turning drive device 90 operates under the control of the turning ECU 40 to push forward the rear end of the link arm 95. Thus, the turning member 110 rotates counterclockwise in a plan view about the turning axis Ra. Accordingly, the steered wheel 200 (see FIG. 6) that is turned rightward is turned counterclockwise in a plan view and assumes a straight-ahead state (see FIG. 4). When the driver further rotates the operation member 15 counterclockwise, the steered wheel 200 in the straight-ahead state is turned leftward (positive X-axis direction) as shown in FIG. 7.

For example, it is assumed that the steered wheel 200 travels over a bump that protrudes from a flat portion of the road surface. In this case, when the steered wheel 200 rides on the bump, the suspension member 130 swings about the X-axis such that the front end moves upward (see FIG. 8). The moment caused by the swing of the suspension member 130 is transmitted to the damper 163 and the spring 170 via the first link arm 161 and the second link arm 162. Thus, the lengths of the damper 163 and the spring 170 are reduced. As a result, the shock caused by the steered wheel 200 riding on the bump is reduced or absorbed by the shock absorbing mechanism 160.

When the steered wheel 200 then lands on the flat portion of the road surface from the bump, the upward force received from the bump by the steered wheel 200 decreases. In this case, as shown in FIG. 9, the suspension member 130 swings about the X-axis such that the front end moves downward due to the weight of the steered wheel 200 and the restoring force of the spring 170, and the turning member 110 and the steered wheel 200 move downward. That is, the steered wheel 200 moves to maintain the state in which the steered wheel 200 is in contact with the road surface (including the bump). Thus, the shock caused by the steered wheel 200 landing on the flat portion from the bump is reduced. For example, when the steered wheel 200 then repeatedly moves in the up-down direction relative to the vehicle body, the shock absorbing mechanism 160 operates to absorb the movement. That is, the vibration of the steered wheel 200 in the up-down direction relative to the vehicle body is reduced and converged by the shock absorbing mechanism 160.

### [3. Summary of Embodiment]

The technical features of the suspension system 100 according to the present embodiment can be described, for example, as in (1) to (6) below.
(1) The suspension system 100 according to the present embodiment includes the turning member 110 that is connected to the axle 203 of the steered wheel 200 of the vehicle and extends upward from the axle 203, the suspension member 130, and the shock absorbing mechanism 160. The turning member 110 turns the steered wheel 200 by receiving an external force for turning. The suspension member 130 is disposed above the steered wheel 200, one end of the suspension member 130 is swingably connected to the turning member 110, and the other end of the suspension member 130 is swingably connected to the vehicle body. One end of the shock absorbing mechanism 160 is connected to at least one of the turning member 110 and the suspension member 130, and the other end of the shock absorbing mechanism 160 is connected to the vehicle body. In the present embodiment, the one end of the shock absorbing mechanism 160 is connected to the suspension member 130 (see FIGS. 3, 5, 8, and 9).

With this configuration, the suspension member 130 can connect the turning member 110 to the vehicle body in a state in which the turning member 110 is rotatable about the turning axis Ra and movable (displaceable) in the up-down direction relative to the vehicle body. The vibrations and shocks applied to the steered wheel 200 are reduced by the shock absorbing mechanism 160 directly or indirectly connected to the turning member 110. The suspension member 130 that functions as described above is disposed above the steered wheel 200. Therefore, the suspension member 130 can be disposed so as not to consume the space inward of the steered wheel 200 in the right-left direction (on the inside of the vehicle). Thus, the space inward of the steered wheel 200 can be used as a vehicle cabin space, a space for disposing other devices, etc. For example, the flat region on the floor of the vehicle cabin space can be extended to the space inward of the steered wheel 200. That is, with the suspension system 100 according to the present embodiment, the space inward of the steered wheel 200 can be used effectively.

The end of a conventional suspension member called, for example, a lower arm need not be inserted inward of the rim of the wheel 202 (see FIG. 2) of the steered wheel 200. Therefore, the space inward of the rim of the wheel 202 can easily be used as a space for disposing other devices such as the traveling drive device 80 or other members.

When the suspension member 130 is disposed above the steered wheel 200, it is not necessary that the entire suspension member 130 be always located above the steered wheel 200 (positive Z-axis direction). For example, when the steered wheel 200 moves upward relative to the vehicle body (see FIG. 8), part of the suspension member 130 may be located below the upper end of the steered wheel 200 (negative Z-axis direction). Even in this case, the consumption of the space inward of the steered wheel 200 by the suspension member 130 is suppressed.

The one end of the shock absorbing mechanism 160 may be connected to the turning member 110 instead of the suspension member 130. For example, the lower end of the first link arm 161 of the shock absorbing mechanism 160 may be rotatably connected to the turning member 110. Any other member (such as another link arm) may be interposed between the shock absorbing mechanism 160 and at least one of the turning member 110 and the suspension member 130. In any case, the shock absorbing mechanism 160 can reduce the vibrations and shocks in the up-down direction that are received by the steered wheel 200.

(2) In the suspension system 100 according to (1), the suspension member 130 includes the first suspension member 140 and the second suspension member 150 disposed above the first suspension member 140.

With this configuration, the turning member 110 and the vehicle body are connected by the two members (first suspension member 140 and second suspension member 150) separated up and down. Therefore, the posture of the turning member 110 can be maintained more stably. In this manner, even when the suspension member 130 is constituted by the two members separated up and down, both of the two members are disposed above the steered wheel 200. Therefore, the consumption of the space inward of the steered wheel 200 due to the disposition of the two members is suppressed.

The suspension member 130 may include only either of the first suspension member 140 and the second suspension member 150. For example, the suspension member 130 may include only the first suspension member 140 out of the first suspension member 140 and the second suspension member 150. In this case, it is appropriate that the turning member 110 be rotatable about the turning axis Ra relative to the first suspension member 140. That is, the first suspension member 140 may include, instead of the ball joint 142, a bearing that supports the first shaft 141 such that it is rotatable about the turning axis Ra. Thus, the first suspension member 140 can support the turning member 110 such that it is rotatable about the turning axis Ra while restricting rotation (swing) of the turning member 110 about the Y-axis and the X-axis relative to the first suspension member 140. In this case, the bearing may be provided to the turning member 110, and the first shaft 141 may be fixed to the first suspension member 140.

In addition to the first suspension member 140 and the second suspension member 150, the suspension member 130 may include a third suspension member aligned with the first suspension member 140 and the second suspension member 150 in the up-down direction. That is, the number of suspension members connecting the vehicle body and the turning member 110 may be one or two, or may be three or more.

(3) In the suspension system 100 according to (1) or (2), the suspension member 130 extends from the one end of the suspension member 130 (one end connected to the turning member 110) in a direction along the front-rear direction (Y-axis direction) of the vehicle body.

With this configuration, the suspension member 130 can be disposed so as not to consume the space inward of the steered wheel 200 and the space above the inward space. Thus, the space inward of the steered wheel 200 can be used more effectively.

In the present embodiment, as shown in FIG. 4, the turning member 110 is connected to the end (front end) of the suspension member 130 in the negative Y-axis direction, and the vehicle body (not shown) is connected to the end (rear end) of the suspension member 130 in the positive Y-axis direction. That is, the suspension member 130 extends rearward from the turning member 110. However, the suspension member 130 may extend forward from the turning member 110. That is, the vehicle body may be connected to the front end of the suspension member 130, and the turning member 110 may be connected to the rear end of the suspension member 130. The orientation of the suspension member 130 in the front-rear direction may be determined as appropriate depending on the size and shape of the vehicle body including the suspension system 100, etc.

It is not essential that the suspension member 130 extend from the one end connected to the turning member 110 in a direction along the front-rear direction of the vehicle body. For example, the suspension member 130 may extend from the one end connected to the turning member 110 in the width direction (X-axis direction) of the vehicle body. Even in this case, at least the consumption of the space inward of the steered wheel 200 is suppressed when the suspension member 130 is disposed above the steered wheel 200 in the up-down direction. From the viewpoint of further effective use of the space inward of the steered wheel 200 as described above, it is preferable that the suspension member 130 extend from the one end connected to the turning member 110 in a direction along the front-rear direction of the vehicle body.

(4) In the suspension system 100 according to any one of (1) to (3), the turning member 110 includes the first connecting portion 112 and the second connecting portion 114. The first connecting portion 112 is connected to the axle 203 and extends upward from the axle 203. The second connecting portion 114 is connected to the upper end of the first connecting portion 112, bulges away from the steered wheel 200, and is partially disposed above the steered wheel 200.

In this configuration, the turning member 110 includes the second connecting portion 114 including a portion that bulges away from the steered wheel 200. Therefore, the first connecting portion 112 can be disposed at a position relatively close to the steered wheel 200 while avoiding interference between the turning member 110 and the steered wheel 200. In the present embodiment, the first connecting portion 112 supports the axle 203 of the steered wheel 200 at a position close to the center of the steered wheel 200 in the width direction. Thus, the steered wheel 200 can be supported more stably.

(5) In the suspension system 100 according to (4), the turning member 110 further includes the third connecting portion 116 that extends upward from the second connecting portion 114. The suspension member 130 is swingably connected to at least one of the second connecting portion 114 and the third connecting portion 116.

In this manner, in the present embodiment, the suspension member 130 supports the turning member 110 at a position directly above the steered wheel 200. Therefore, the turning member 110 connected to the steered wheel 200 can be supported more stably. More specifically, in the present embodiment, the suspension member 130 is connected to the turning member 110 at two locations above the steered wheel 200 (the first end 114a of the second connecting portion 114 and the second end 116a of the third connecting portion 116) (see FIG. 5). This is advantageous for more stable support of the turning member 110 that is elongated in the up-down direction.

In the present embodiment, the suspension member 130 is connected to both the second connecting portion 114 and the third connecting portion 116, but the suspension member 130 may be connected to only either of the second connecting portion 114 and the third connecting portion 116. For example, when the suspension member 130 includes only either of the first suspension member 140 and the second suspension member 150 as described above, the either of the first suspension member 140 and the second suspension member 150 may be connected to only either of the second connecting portion 114 and the third connecting portion 116.

(6) The suspension system 100 according to any one of (1) to (5) further includes the first fixing portion 119 and the second fixing portion 139 that fix the wire 300 disposed across the space through which the turning axis Ra of the steered wheel 200 extends. The first fixing portion 119 is disposed on the turning member 110 at a position above the steered wheel 200, and the second fixing portion 139 is disposed on the suspension member 130. The first fixing portion 119 and the second fixing portion 139 are located opposite to each other across the turning axis Ra in the front-rear direction (Y-axis direction) of the vehicle body. In the present embodiment, the wire 300 is used to supply electric power and/or control signals to the traveling drive device 80 fixed to the turning member 110.

With this configuration, the first fixing portion 119 and the second fixing portion 139 that fix the wire 300 to the suspension system 100 can be disposed at positions opposite to each other across the turning axis Ra and relatively close to each other. Therefore, when the turning member 110 rotates about the turning axis Ra, deformation (twisting, bending, etc.) of the wire 300 disposed across the space through which the turning axis Ra extends is relatively small. Thus, deterioration of or damage to the wire 300 caused by repeated rotation of the turning member 110 (turning of the steered wheel 200) is suppressed.

The steering system 10 according to the embodiment has been described above, focusing on the configuration and operation of the suspension system 100. However, the configuration of the suspension system 100 of the steering system 10 may differ from the configuration shown in FIGS. 1 to 9. Therefore, a modification of the suspension system 100 will be described below, focusing on differences from the above embodiment.

### [4. Modification of Suspension System 100]

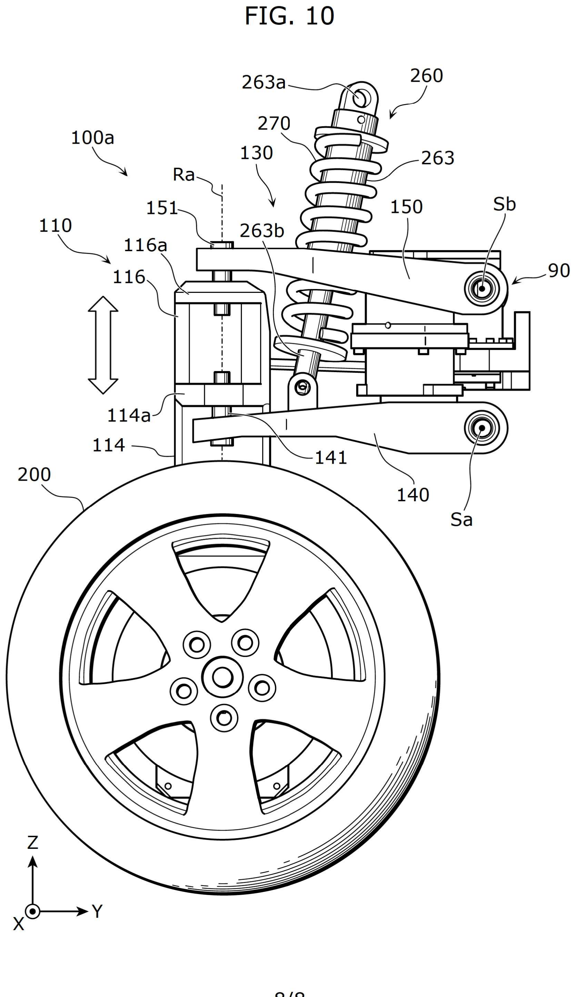

FIG. 10 is a side view showing the configuration of a suspension system 100a according to a modification of the embodiment and its surroundings. The suspension system 100a shown in FIG. 10 includes the turning member 110, the suspension member 130, and a shock absorbing mechanism 260. The turning member 110 rotates about the turning axis Ra by an external force from the turning drive device 90, and the steered wheel 200 is therefore turned about the turning axis Ra. The shock absorbing mechanism 260 is connected to the suspension member 130 swingably connected to the turning member 110. The shock absorbing mechanism 260 reduces vibrations and shocks in the up-down direction that are received by the turning member 110. These components are common to those of the suspension system 100 according to the above embodiment. Therefore, the suspension system 100a according to the present modification achieves the same effects as the suspension system 100 (effective use of the space inward of the steered wheel 200, etc.).

In the present modification, the shock absorbing mechanism 260 of the suspension system 100a does not have the link mechanism that changes the direction of a force received by the turning member 110. In this respect, the shock absorbing mechanism 260 according to the present modification differs from the shock absorbing mechanism 160 according to the above embodiment. Specifically, the shock absorbing mechanism 260 includes a spring 270 and a damper 263. The damper 263 damps the expansion and contraction of the spring 270. An upper end 263a of the damper 263 is connected to the vehicle body by a shaft (not shown), and a lower end 263b of the damper 263 is connected to the suspension member 130 (first suspension member 140) by a shaft (not shown). That is, the force is transmitted directly between the suspension member 130 and each of the spring 270 and the damper 263 without intermediation of the link mechanism.

In this manner, the shock absorbing mechanism 260 does not have the link mechanism that changes the direction of the force. This is advantageous for improvement in manufacturing efficiency of the suspension system 100a including the shock absorbing mechanism 260, or for reduction in manufacturing cost. From the viewpoint of suppressing an increase in size of the suspension system 100a in the up-down direction (Z-axis direction), it is preferable to provide the link mechanism (first link arm 161 and second link arm 162) that changes the direction of the force as in the shock absorbing mechanism 160 according to the embodiment.

### (Other Embodiments)

The suspension system according to the present invention has been described above based on the embodiment and its modification. However, the present invention is not limited to the above embodiment and modification. The scope of the present invention encompasses various modifications that would be conceivable by those skilled in the art and applied to the above embodiment or modification, or forms constructed by combining a plurality of the above components without departing from the spirit of the present invention.

The turning member 110 need not have the shape shown in FIGS. 1 to 5, etc. The turning member 110 may be, for example, a rod that extends linearly in the up-down direction. Even in this case, it is appropriate that the turning member 110 be connected to the axle 203 of the steered wheel 200 and the suspension member 130, and include a portion that supports the link arm 95 (see FIG. 4) at a position different from the turning axis Ra when viewed in the longitudinal direction of the rod. From the viewpoint of, for example, more stable support of the turning member 110 (steered wheel 200) by the suspension member 130, it is preferable that the turning member 110 have the shape shown in FIGS. 2 to 5, etc.

The steered wheel 200 of the suspension system 100 need not be turnable independently of the other steered wheel. For example, the steered wheel 200 that is the left front tire-wheel assembly and the right front tire-wheel assembly that is the other steered wheel may be connected by a connecting member including tie rods at both ends such that the steered wheel 200 and the right front tire-wheel assembly are turned in synchronization. In this case, the turning member 110 can receive the external force for turning the steered wheel 200 from the connecting member.

The traveling drive device 80 need not be fixed to the turning member 110. For example, the driving force for traveling may be provided to the steered wheel 200 via a universal joint from the traveling drive device 80 fixed to the vehicle body. The source of the driving force for traveling to be provided to the steered wheel 200 need not be the motor that operates with electric power. The source may be a prime mover that operates with fuel such as gasoline or light oil.

The steered wheel 200 need not be provided with the driving force for traveling. That is, the steered wheel 200 need not function as the driving wheel for traveling of the vehicle. The steered wheel 200 may be a driven wheel (non-driving wheel). In this case, there is no need to dispose the traveling drive device 80 inward of the steered wheel 200. Therefore, the space in which the traveling drive device 80 is disposed (see FIGS. 2 to 4) can be used as a space for disposing other devices or members.

Each of the first suspension member 140 and the second suspension member 150 of the suspension member 130 need not have the V-shape or the U-shape in a plan view (see FIGS. 2 to 4). At least one of the first suspension member 140 and the second suspension member 150 may have a linear shape extending along the front-rear direction (Y-axis direction). From the viewpoint of, for example, stably supporting the suspension member 130 on the vehicle body and downsizing the suspension system 100 including the shock absorbing mechanism 160, it is preferable that each of the first suspension member 140 and the second suspension member 150 have the V-shape or the U-shape as shown in FIGS. 2 to 4.

It is not essential to use the ball joints 142 and 152 to connect the first suspension member 140 and the second suspension member 150 to the turning member 110, respectively. For example, each of the first suspension member 140 and the second suspension member 150 may include, instead of the ball joint 142 or 152, a connecting member that allows only rotation about the X-axis and rotation about the turning axis Ra. Even in this case, the first suspension member 140 and the second suspension member 150 can guide the movement (displacement) of the turning member 110 in the up-down direction while maintaining the posture that is substantially parallel to the up-down direction.

Each of the first fixing portion 119 and the second fixing portion 139 that fix the wire 300 may be realized by a material other than the resin hook or the adhesive tape. For example, the first fixing portion 119 may be a protrusion or a groove integrally provided to the turning member 110. The second fixing portion 139 may be a protrusion or a groove integrally provided to the second suspension member 150 or the first suspension member 140.

The wire 300 may be connected to a device or an electrical component other than the traveling drive device 80. The wire 300 may be connected to, for example, the turning drive device 90. In this case, electric power and/or control signals for operating the motor of the turning drive device 90 may be supplied to the turning drive device 90 via the wire 300.

The steering system 10 including the suspension system 100 according to the embodiment may be used in a vehicle including, for example, three, five, or more tire-wheel assemblies instead of the vehicle including four tire-wheel assemblies. The above various supplementary notes regarding the suspension system 100 according to the embodiment may also be applied to the suspension system 100a according to the modification of the embodiment.

### INDUSTRIAL APPLICABILITY

The suspension system according to the present invention is useful as a suspension system for supporting a steered wheel of a vehicle, and can be used as a suspension system for vehicles such as automobiles, agricultural machines, or construction machines.

### Description of the Reference Numerals

10: steering system, 15: operation member, 20: steering angle sensor, 30: higher-level ECU, 40: turning ECU, 80: traveling drive device, 90: turning drive device, 91: turning force generating unit, 93: torque converting unit, 95: link arm, 100, 100a: suspension system, 110: turning member, 112: first connecting portion, 114: second connecting portion, 114a: first end, 116: third connecting portion, 116a: second end, 119: first fixing portion, 130: suspension member, 131: connecting shaft, 139: second fixing portion, 140: first suspension member, 140a, 150a: swing shaft hole, 141: first shaft, 142, 152: ball joint, 150: second suspension member, 151: second shaft, 160, 260: shock absorbing mechanism, 161: first link arm, 162: second link arm, 162a: support shaft hole, 163, 263: damper, 163a, 263b: lower end, 163b, 263a: upper end, 170, 270: spring, 200: steered wheel, 202: wheel, 203: axle, 300: wire, Ra: turning axis, Sa, Sb: swing axis

## Claims

1. A suspension system comprising:
a turning member that is connected to an axle of a steered wheel of a vehicle, extends upward from the axle, and turns the steered wheel by receiving an external force for turning;
a suspension member that is disposed above the steered wheel, and includes one end swingably connected to the turning member and the other end swingably connected to a vehicle body of the vehicle; and
a shock absorbing mechanism that includes one end connected to at least one of the turning member and the suspension member and the other end connected to the vehicle body.

2. The suspension system according to claim 1, wherein the suspension member includes a first suspension member and a second suspension member disposed above the first suspension member.

3. The suspension system according to claim 1 or 2, wherein the suspension member extends from the one end of the suspension member in a direction along a front-rear direction of the vehicle body.

4. The suspension system according to claim 1 or 2, wherein the turning member includes:
a first connecting portion that is connected to the axle and extends upward from the axle; and
a second connecting portion that is connected to an upper end of the first connecting portion, bulges away from the steered wheel, and is partially disposed above the steered wheel.

5. The suspension system according to claim 4, wherein:
the turning member further includes a third connecting portion that extends upward from the second connecting portion; and
the suspension member is swingably connected to at least one of the second connecting portion and the third connecting portion.

6. The suspension system according to claim 1 or 2, further comprising a first fixing portion and a second fixing portion that fix a wire disposed across a space through which a turning axis of the steered wheel extends, wherein:
the first fixing portion is disposed on the turning member at a position above the steered wheel;
the second fixing portion is disposed on the suspension member; and
the first fixing portion and the second fixing portion are located opposite to each other across the turning axis in a front-rear direction of the vehicle body.
